# EUROPEAN PATENT SPECIFICATION

(11) **EP 2 580 139 B1**
(45) Date of publication and mention of the grant of the patent: **10.08.2016**
(21) Application number: 11726934.0
(22) Date of filing: 02.06.2011
(51) Int. Cl.: B65D 75/08, B65D 75/12, B65D 75/52, B65D 85/60, B31B 37/00

(54) **PACKAGING**
VERPACKUNG
EMBALLAGE

(30) Priority: 14.06.2010 GB 201009899
(43) Date of publication of application: 17.04.2013
(73) Proprietor: Mondelez UK Holdings & Services Limited, Uxbridge, Middlesex UB8 1DH (GB)
(72) Inventor: CHEEMA, Parbinder, Birmingham West Midlands B30 2LU (GB); WILLEY, Jason Denis, Barry CF63 1RG (GB)
(74) Representative: Wilson Gunn
(86) International application number: PCT/GB2011/051041
(87) International publication number: WO 2011/158014

(56) References cited:
- EP-A1- 1 449 789
- DE-U1-202010 001 360
- US-A1- 2008 199 644

## Description

### Technical Field of the Invention

The present invention relates to packaging. The invention relates in particular, but not exclusively, to packaging for consumable products such as confectionery. The present invention also relates to methods of manufacturing such packaging.

### Background to the Invention

Packaging for products often serves a number of functions. These may include protecting the product and providing information about the product. In some cases, the primary function of the packaging is to be attractive to the customer. This may be particularly so where the product is a confectionery or other food product which may be given as a treat or gift and where the visual appearance of the packaging plays an important part in the overall experience for the end user.

It is known to package consumable products such as chocolate bars and other snack type confectionery products in a package which is formed from a wrapper of flexible material. Such known wrappers may be in the form of a length of flat, foldable material having an inner surface directed to the product and an outer surface. The material may be printed on or otherwise be provided with information which is visible to the consumer on the outside of the formed package. In some packaging processes, the wrapper is supplied as part of a continuous roll or film of wrappers.

One known packaging arrangement is commonly referred to as a flow-wrap package. This type of package is produced using a flow-wrap method in which a film of material is supplied in a roll to package a number of products in a substantially continuous process. The material is fed through a machine which folds it about each product or each stack of products in turn so that opposing longitudinal side edges are brought into contact, inner face to inner face, and bonded together to form a longitudinal fin seam. The material is crimped at either end of the product or stack to form end seams and the material is cut to separate each package in turn from the remainder of the film. The seams may be formed using an adhesive to bond the opposing surfaces of the wrapper or by heating the material under pressure so that the opposing surfaces melt and fuse together to form a welded seam.

The flow-wrap method is often used to package generally blocked shaped products such as chocolate or other confectionery bars and the like. However, the method can be modified to package products of a different shape or to package a stack or array of smaller products positioned side-by-side.

It is also known to package a number of products arranged in an array or stack by folding a wrapper around the stack and securing the wrapper in the folded condition to form a tubular package. The wrapper is folded circumferentially about the stack so that one longitudinal edge of the wrapper overlaps the other longitudinal edge and is held in place by means of adhesive or otherwise bonded to form a longitudinal seal. The wrapper is longer than the stack and the protruding ends of the wrapper are folded to form tabs in an overlapping arrangement to close the ends of the package. The end closure tabs can be adhered to one another so that the wrapper forms a sealed package for the products. This type of packaging is used for a variety of consumable products such as biscuits and confectionery items including chewing or bubble gum pellets and sticks, mints, gums, hard boiled sweets, candies, chocolates, toffee and the like.

For either type of packaging, suitable wrappers can be made from a variety of materials including polymeric materials, metallic foil, and paper. Often the wrapper will be formed as a laminate having two or more layers of different materials. For packaging confectionery products, a commonly used laminate comprises a metallic, often aluminium, foil which may be laminated together with a paper layer. However, other materials can be used including polymeric materials which may include thermoplastic materials such as polyethylene terephthalate (PET), for example. Depending on the types of materials used, the known wrappers can be used to form a fully sealed package which is substantially gas and moisture impervious. However, for some consumable product applications, a hermitically sealed package is not desirable.

The shape and construction of the known types of packaging are largely functional, with the intention of providing a closed and often sealed package to protect the contents. Any visual attractiveness is generally provided by the design printed on the outside of the wrapper.

US2008/0199644 A1 discloses a method for making a bag having a window. The method comprises making an outer surface comprised of two layers and making an inner surface comprised of two layers and laminating the inner and outer surfaces together. A hole is made in the outer surface prior to lamination to from a window.

It is an object of the invention to provide an alternative form of packaging which is attractive to potential customers.

It is a further object of the invention to provide an alternative method of manufacturing packaging materials that can be used to produce packaging having an attractive appearance and/or to provide an alternative method of manufacturing such packaging.

### Summary of the Invention

In accordance with a first embodiment of the invention, there is provided a method of manufacturing a packaging material for using in forming a package to enclose one or more items, the method comprising:
laminating together at least two layers of materials to form a laminated packaging material having an inner laminate structure and an outer laminate structure, the inner laminate structure being translucent or transparent and the outer laminate structure being opaque;
forming a score line in the opaque laminate structure to define a section within the opaque laminate structure which can be wholly or partially removed;
characterized in that the method comprises forming the score line so that it only partially encircles the section such that the section remains attached to the remainder of the opaque laminate structure along a line about which the section of opaque laminate structure can be folded.

The method may also comprise forming a line of weakness in the opaque laminate structure along which the opaque laminate structure may be torn to completely remove the section.

The method may comprise permanently bonding the inner and outer laminate structures together over substantially the whole of their opposed surface areas except for an area which is, or is to be, bounded by the score line. The method may comprise applying a permanent laminating adhesive to substantially the whole of the lamination face of at least one of the inner and outer laminate structures except for an area which is, or is to be, bounded by the score line and bringing the lamination faces of the inner and outer laminate structures into contact. In one arrangement, the method comprises leaving the lamination faces of the inner and outer laminate structures in the area which is, or is to be, bounded by the score line free of any adhesive. In an alternative arrangement, the method comprises applying a peelable adhesive to the lamination face of at least one of the inner and outer laminate structures within the area which is, or is to be, bounded by the score line. The method may further comprise applying a peelable, and more particularly a re-sealable, adhesive to the lamination face of at least one of the inner and outer laminate structures within an outer peripheral region of the area which is, or is to be, bounded by the score line.

The method may comprise forming a continuous length of laminated packaging material defining a plurality of package forming portions along its length, and forming at least one said score line in the opaque laminate structure within each of the package forming portions. The laminated packaging material may be a flexible material, each of the package forming portions comprising a wrapper for forming into a package for enclosing one or more items and the method may comprise forming the continuous length of flexible packaging material into a roll. Where the sections of the opaque laminate structure are wholly removable, the method may comprise removing the sections prior to the material being formed into a roll.

The method may comprise printing on the opaque laminate structure so that the printing is visible on the inner surface of the section of the opaque laminate structure.

The laminated material may be stiff but foldable and method may comprise forming the laminated material into a blank for folding into a carton. The laminated material may be a laminated cardboard or paperboard.

The method may comprise forming the score line by laser etching.

In accordance with a second embodiment of the invention there is provided a package assembly comprising at least one item and a package enclosing the at least one item, the package being formed from a laminated material having an inner and an outer laminate structure, the inner laminate structure being translucent or transparent and the outer laminate structure being opaque, in which a section of the outer laminate structure is movable relative to the inner laminate structure about a fold between a closed position in which it overlies a corresponding section of the inner laminate structure and an open position in which it is displaced from the inner laminate structure to enable the contents of the package to be at least partially seen through the inner laminate structure.

A line of weakness may be provided in the outer laminate structure by means of which the section can be fully removed after opening. The section of the outer laminate structure may be bonded to the inner laminate structure by means of a peelable adhesive. The peelable adhesive may be resealable so that the section can be reclosed. The peelable/re-sealable adhesive may be provided about a peripheral edge region of the section of the outer laminate structure and/or a peripheral edge region of the corresponding section of the inner laminate structure. Printing may be applied to the outer laminate structure within the section so as to be visible from the inner surface of the section when the section is moved to the open position.

### Detailed Description of the Invention

Several embodiments of the invention will now be described, by way of example only, with reference to the accompanying drawings, in which:
Figure 1 is a plan view of an example of a package assembly not in accordance with the claimed invention;
Figure 2 is a cross sectional view on an enlarged through a section of a laminated wrapper forming part of the packaging assembly of Figure 1, taken on line A-A;
Figure 3 is a perspective view of a further example of a package assembly not in accordance with the claimed invention;
Figure 4 is a perspective view of a still further example of a package assembly not in accordance with the claimed invention;
Figure 5 is a plan view of a package assembly in accordance with an embodiment of the invention, showing a window cover flap in a closed position;
Figure 6 is a view similar to that of Figure 5 but showing the window cover flap in an open position; and
Figure 7 is a cross sectional view through a section of a laminated wrapper forming part of the packaging assembly of Figure 5, taken on line B-B.

The same reference numerals but increased by 100 in each case will be used to identify the same or similar features in the various embodiments described below.

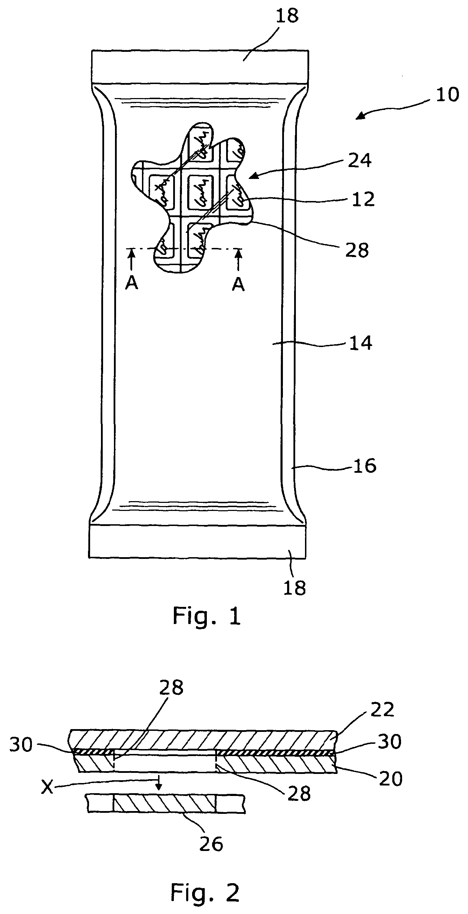

Figure 1 illustrates a first example of a packaging assembly 10 which as shown is not in accordance with the presently claimed invention. The package assembly 10 include one or more items or products, in this case a chocolate bar 12, which is encased in a tubular package 14 formed from a wrapper 16 of flexible material.

The package 14 is a flow-wrap package in which the wrapper 16 of flexible material is folded around the product and sealed to fully enclose the product. Longitudinal edge regions of the wrapper 16 are bonded together, inner face to inner face, to form a longitudinal sealed fin seam (not shown) which extends along a rear face of the package in a known manner. Opposing end edge regions of the wrapper that extend beyond the ends of the chocolate bar are bonded together in face to face relation to form transverse sealed seams 18 at either end of the product, also in a known manner. The longitudinal and transverse seams 18 can be formed using an adhesive to bond the opposing surfaces of the wrapper or by heating the material under pressure so that the opposing surfaces melt and fuse together to form a welded seam. The longitudinal seam is referred to as a "fin seam" because it projects outwardly in the manner of a fin when first formed. Usually, however, the fin seam will be folded over to one side or the other when the package is completed.

The package 14 is formed using a form-fill-seal (FFS) packaging machine (not shown). The wrapper 16 is provided as part of a continuous roll or film of wrappers that is roll fed into the machine and folded about each product in turn. The inner surfaces of opposing longitudinal edge regions of the wrapper are brought into contact and bonded together to form the longitudinal fin seam. Opposing regions of the material at either end of the product are also brought into contact and bonded to form the transverse end seams 18 and the material is cut to separate each package 14 from the remainder of the film.

The wrapper 16 comprises a lamination of two or more layers of flexible materials that are bonded together face to face. Where the product is a consumable product, at least one of the layers may be substantially moisture and gas impervious and the package can be hermetically sealed. It should be noted though that for some consumable products, a hermetically seal package is not desirable.

For the purposes of the following description and the accompanying claims, the laminated wrapper 16 can be considered has having an inner laminate structure 20, for positioning proximal to the product, and an outer laminate structure 22, for positioning distal from the product. The inner and outer laminate structures 20, 22 are bonded together face to face and each comprises one or more layers of material. For example, the material could be a lamination of only two layers of material, an inner layer which forms the inner laminate structure 20 and an outer layer which forms the outer laminate structure 22. However, in more complex embodiments, one or both of the inner and outer laminate structures may be made up of more than layer of material.

One of the inner and outer laminate structures 20, 22 is opaque whilst the other is not opaque. The other laminate structure is at least translucent but is preferably transparent. A viewing window 24 through which the contents of the package can be at lease partially seen is provided by removing a section 26 of the opaque laminate structure. In the present embodiment, the outer laminate structure 22 is the non-opaque laminate structure whilst the inner laminate structure 20 is opaque. This is advantageous as it means the outer surface of the package is continuous, with no exposed step around the periphery of the viewing window which can become contaminated with dirt or other debris and which might otherwise become damaged when the packaging assembly is handled. However, this is not essential and the opaque laminate structure can be provided on the outside of the wrapper 16 in some embodiments.

It is envisaged that in most embodiments the non-opaque laminate structure will be substantially transparent so that the contents of the package can be seen clearly through the window 24. However, in some embodiments the window may be translucent and could, for example, have a frosted effect but through which the contents can still be seen. In the remainder of the specific description, the non-opaque laminate structure will be described as being transparent for convenience but it should be borne in mind that it could also be translucent.

The inner and outer laminate structures 20, 22 can be made of any suitable materials for use in packaging the products, subject to the requirement that one is transparent and the other opaque. For example, the opaque laminate structure may comprise a metallic foil, such as an aluminium foil, and/or a layer of paper. The transparent laminate 22 structure may comprise a polymeric material. Many transparent polymeric materials are used in the production of laminated packaging materials, as will be well known by the skilled addressee, and any suitable such materiel can be adopted in the present embodiment.

The laminate wrapper 16 is formed by laminating the inner 20 and outer 22 laminate structures together in face to face relation. A score line 28 is formed through the opaque laminate structure, in this case the inner laminate structure 20, to define the section 26 which is to be removed to form the viewing window 24. The removable window section 26 is subsequently removed as indicated by the arrow X in Figure 2 which illustrates schematically removal of the section 26. The opaque laminate structure may be scored before, during or after the lamination process. Similarly, the opaque section can be removed, before, during or after the lamination process. The removable window section may be removed prior to the wrapper being formed into a package 14 about the product or it may be removed during or after the wrapping process. In one embodiment, the removable window section is removed using a suction device. The suction device could be part of a "pick and place" device used to move a packaged item from a production line into a carton or other outer packaging arrangement. One of the suckers on the device can be arranged to contact the removable widow section and be raised higher than the rest to peel the removable window section away.

The wrapper 16 may be formed as part of a continuous length of laminated material having a number wrappers defined along its length, each with a viewing window. The continuous length of material may be formed into a roll for subsequent use in a FFS packaging machine as described above to produce the finished packaging assembly. The removable window section 26 of the opaque laminate structure may be removed prior to the material being formed into a roll or it may be removed after the material has been formed into a roll as part of the flow-wrapping process.

The opposed faces of the inner and outer laminate structures 20, 22 that are bonded together in the lamination process will be referred to herein and the laminations faces.

The score line 28 can be produced by any suitable means. In one embodiment, the score line is produced by means of laser etching through the opaque laminate structure, in a known manner. The use of laser etching to produce the score line is advantageous as it enables viewing windows 24 of almost any desired shape to be produced, including complex shapes with non-linear edges. Laser etching is also adaptable to allow the same machinery to produce material having different shaped viewing windows. However, the score line may be produced by other means. For example, the score line 28 can be produced using a pair of contra-rotating die cylinders (not shown) positioned on opposite sides of the laminated material, one of the die cylinders being positioned for contact with the opaque laminate structure and having a blade for forming the score line, the other die cylinder being arranged for contact with the transparent laminate structure and having no blade.

The inner and outer laminate structures 20, 22 are laminated together using any suitable method as known in the art. In one method, the laminate structures 20, 22 are bonded together using a permanent laminating adhesive 30. The adhesive is applied to a laminating surface of one or both of the laminate structures, except in the area in which the viewing window 24 is defined by the score line 28, or which is to be defined by the score line if scoring takes place during or after lamination. Within the area in which the viewing window is, or is to be defined by the score line 28, either no adhesive is applied so that the inner and outer laminate structures 20, 22 are not laminated in this region or a peelable adhesive may be applied so that the removable window section 26 of the opaque laminate structure can be peeled away from the transparent laminate structure after the score line 28 has been produced. This later arrangement enables greater control over the removal of the section 26. Where a peelable adhesive is used, the adhesive may be applied to the opaque laminate structure and be configured so that it peels away from the transparent laminate structure preferentially so that no or only minimal residue is left on the transparent laminate structure.

The provision of a viewing window 24 gives the packaging assembly 10 an attractive and unusual appearance for the type of packaging and can be adapted in various ways to appeal to consumers. Printing may be applied to the laminate material which is visible to the consumer on the outside of the package to provide an attractive design and the window 24 can be shaped to form part of the overall design and/or to fit within a theme of the design. The window might be shaped to conform to a brand mark or image for example. In another example, for confectionery material packaged especially for Valentines Day, the window might be shaped like a heart. Other novel shapes for the window 24 could also be used such as animal shapes or cartoon figures. The shape and position of the window 24 can also be designed to reveal the contents of the package in an attractive and/or unusual manner to appeal to a consumer.

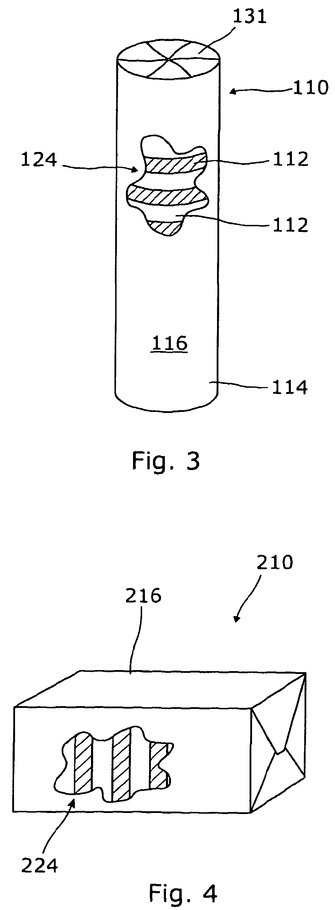

Figure 3 illustrates a second example of a packaging assembly 110 which as shown is also not in accordance with the presently claimed invention. The packaging assembly 110 in accordance with the second example includes a number of individual items or products 112 arranged side by side in a stack. The stack of products 112 is encased in a tubular package 114 formed from a wrapper 116 of flexible material in a known manner. The products may be any products such as biscuits and confectionery items including chewing or bubble gum pellets and sticks, mints, gums, hard boiled sweets, candies, chocolates, toffee and the like.

The wrapper 116 is similar to the wrapper 16 in the first embodiment and is made from a laminated material having inner and outer laminate structures, one of which is transparent and the other opaque. A viewing window 124 is formed in the wrapper 116 by removing a section of the opaque laminate structure using any of the methods described above in relation to the first embodiment.

The packaging assembly 110 of the second example differs from the first in that the package is not formed using a FFS process. Rather, in this case the wrapper 116 is folded circumferentially about the stack so that one longitudinal edge of the wrapper overlaps the other longitudinal edge and is held in place by means of adhesive or otherwise bonded to form a flat longitudinal seam. The wrapper is longer than the stack and the protruding ends of the wrapper are folded to form tabs 130 in an overlapping arrangement to close the ends of the package. The end closure tabs 131 can be adhered to one another so that the wrapper forms a sealed package for the products.

With this type of packaging, the overall shape of the package 114 is determined largely by the shape of the products. In the packaging assembly 110 in accordance with the second embodiment, the products 112 have a circular outer profile and as a consequence the package 114 has a generally cylindrical shape. Figure 4, illustrates an alternative example of a packaging assembly 210 in which the products 212 have a rectangular or square outer periphery such that the package 114 has a corresponding square or rectangular shape in lateral cross section. In all other respects, the packaging assembly 210 is the same as the packaging assembly 110 and includes a package made from a wrapper 216 of a laminated material having inner and outer laminate structures, one of which is transparent and the other opaque. A viewing window 224 is formed in the wrapper 216 by removing a section of the opaque laminate structure using any of the methods described above in relation to the first example.

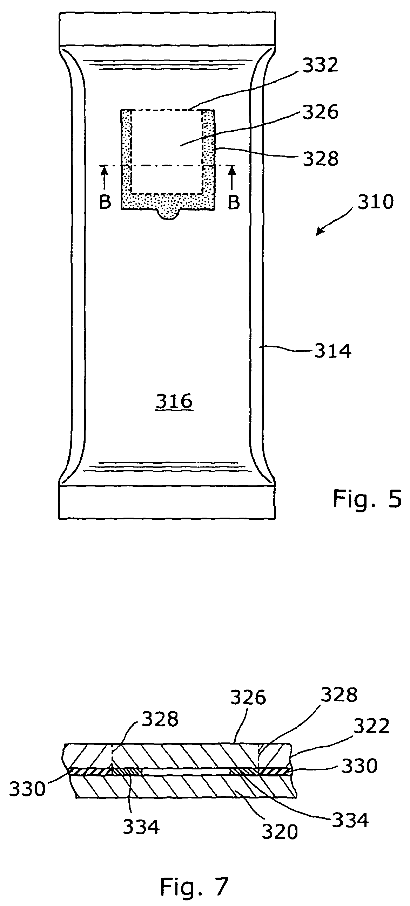

Figures 5 to 7 illustrate an embodiment of a packaging assembly 310 in accordance with the claimed invention. The packaging assembly 310 is similar to the packaging assembly 10 of the first example and includes one or more items or products, which in this case is also a chocolate bar 312, encased in a tubular package 314 formed from a wrapper 316 of flexible material using flow-wrap techniques.

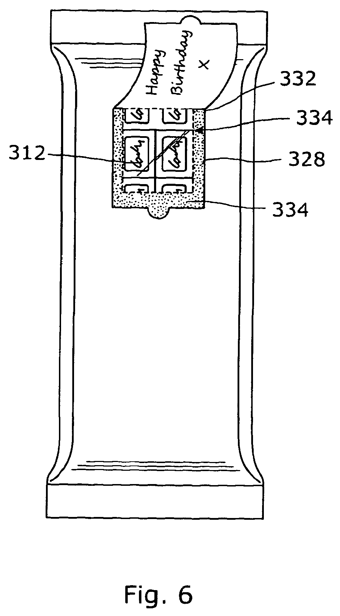

The packaging assembly 310 differs from the packaging assembly 10 of the first example in that the window is only partially formed. In this embodiment, the removable window section 326 of the opaque laminate structure is not wholly removed and forms a flap covering the window. The opaque laminate 322 structure is provided on the outside of package such that the flap is accessible to a consumer and the inner laminate structure 320 is transparent. To produce the window cover flap 326, the score line 328 which defines the widow 324 is formed about three sides only the window so that the section 326 of the opaque laminate structure remains connected with the remainder of the opaque laminate structure 322 along a fold line 332 on one side. The section 326 thus forms a window cover flap, which is movable about the fold line 332 between a closed position in which it overlies the transparent laminate structure 320 to cover the window 324 (as shown in Figure 5) and an open position in which it extends away from the transparent laminate structure 320 so that the product 312 can be seen through the window 324 (as shown in Figure 6).

A peelable adhesive 334 is used to hold the window cover flap 326 in the closed position. The peelable adhesive 334 can be applied about the periphery of the window 324 on the inner laminate structure so as to leave a central region of the window clear through which the interior of the package can be viewed. Alternatively, the peelable adhesive can be applied to the inner surface of the flap 326 or to both the window and the flap. The peelable adhesive may be a cold seal or any other suitable peelable adhesive and may be applied as a continuous layer or in a pattern. In an advantageous embodiment, the peelable adhesive 334 is a re-sealable adhesive so that the window cover flap 326 can be re-closed a number of times after initial opening. A line of weakness, such as a score line or a line of perforations, can be formed in the opaque laminate structure along the fold line 332 to enable the window closure flap 326 to be removed after opening.

The window closure flap 326 adds a further aspect to the packaging which can be used to make it attractive to consumers and can be adapted in a variety of ways. For example, the opaque laminate structure 322 may be printed on to provide a message or other information which can read on the inside of the window cover flap 326 when it is opened. This could be used to convey a message or greeting such as "Happy Birthday" for example. The packaging can be configured so that the inner surface of the window closure flap 326 can be written on by a consumer and the flap re-closed. This may be particularly beneficial where the product is expected to be given a gift as it provides the opportunity for the giver to add a personal message or greeting. Alternatively, a greeting or message card or the like can be provided for insertion under the flap. Such a card may have a pre-printed message or greeting and/or may be configured to be written on.

In a further alternative application, statutory or other useful information can be printed on the opaque laminate structure so as to be visible on the inside of the window closure flap 326 when it is opened. This can be used to advantageously leave the whole, or at least a larger area, of the exterior of package 314 free of such information providing greater freedom to apply an attractive design to the package to appeal to consumers. Promotional information such as prize codes and vouchers can also be proved on the inside of the flap. In this case, the window closure flap 326 may be removable as described above.

A window closure flap as taught in relation to this embodiment can be provided in any of the examples disclosed herein in accordance with the claimed invention.

Whilst the preferred embodiments all comprise packaging assemblies in which a package is formed from a wrapper of flexible material, the invention can be extended to other forms of packaging. For example, a packaging assembly comprising one or more items contained in a package in the form of a carton made from a blank of stiff but foldable material can be produced in accordance with the invention. The material from which the blank is produced is laminated to have an inner and an outer laminate structure, the inner one of which is transparent and the outer one opaque. A viewing window is produced by scoring the opaque laminate structure to wholly or partially remove a section of the opaque laminate structure in accordance with the methods taught above. Where the section is only partially removed in accordance with the invention, it forms a window closure flap similar to that in the embodiment described above in relation to Figures 5 to 7, except that the flap will be somewhat stiffer and so more like a card. The card could be adapted to form a greetings card and may be removably attached to the remainder of the opaque laminate structure via a line of weakness. This type of packaging may have particular application in packaging for confectionery products such as chocolates, for example.

Whilst the invention has been described in particular in relation to packaging for consumable products and especially confectionery products, it can be adapted to package any suitable type of products.

The foregoing examples and embodiments are not intended to limit the scope of protection which is defined by the claims,

## Claims

1. A method of manufacturing a packaging material for use in forming a package to enclose one or more items, the method comprising:
a. laminating together at least two layers of materials to form a laminated packaging material having an inner laminate structure (320) and an outer laminate structure (322), the inner laminate structure being translucent or transparent and the outer laminate structure being opaque;
b. forming a score line (328) in the opaque laminate structure to define a section (326) within the outer opaque laminate structure which can be wholly or partially removed;
**characterized in that** the method comprises forming the score line (328) so that it only partially encircles the section (326) such that the section remains attached to the remainder of the opaque laminate structure along a line (332) about which the section (326) of opaque laminate structure can be folded.

2. A method as claimed in claim 1, the method comprising forming a line of weakness in the opaque laminate structure along which the opaque laminate structure may be torn to completely remove the section (326) .

3. A method as claimed in any preceding claim, the method comprising bonding the inner and outer laminate structures (320, 322) together over substantially the whole of their opposed surface areas except for an area which is, or is to be, bounded by the score line (328).

4. A method as claimed in claim 3, the method comprising applying a permanent laminating adhesive to substantially the whole of the lamination face of at least one of the inner and outer laminate structures (320, 322) except for an area which is, or is to be, bounded by the score line (328) and bringing the lamination faces of the inner and outer laminate structures into contact.

5. A method as claimed in claim 4, the method comprising leaving the lamination faces of the inner and outer laminate structures (320, 322) in the area which is, or is to be, bounded by the score line (328) free of any adhesive.

6. A method as claimed in claim 4, the method comprising applying a peelable adhesive (334) to the lamination face of at least one of the inner and outer laminate structures (320, 322) within the area which is, or is to be, bounded by the score line (328).

7. A method as claimed in claim 4, the method comprising applying a peelable, and more particularly a re-sealable, adhesive (334) to the lamination face of at least one of the inner and outer laminate structures (320, 322) within an outer peripheral region of the area which is, or is to be, bounded by the score line (328).

8. A method as claimed in any preceding claim, the method comprising forming a continuous length of laminated packaging material defining a plurality of package forming portions (316) along its length, and forming at least one said score line (328) in the outer opaque laminate structure (322) within each of the package forming portions.

9. A method as claimed in any preceding claim, wherein the material is a flexible material and the method comprises forming the continuous length of flexible packaging material into a roll.

10. A method as claimed in any preceding claim, wherein the method comprises printing on the outer opaque laminate structure (322) so that the printing is visible on the inner surface of the section (326) of the opaque laminate structure.

11. A package assembly (310) comprising at least one item (312) and a package (314) enclosing the at least one item, the package being formed from a laminated material having an inner (320) and an outer (322) laminate structure, the inner laminate structure (320) being translucent or transparent and the outer laminate structure (322) being opaque, **characterized in that** a section (326) of the opaque outer laminate structure (332) is movable relative to the inner laminate structure about a fold line (328) between a closed position in which it overlies a corresponding section of the inner laminate structure (320) and an open position in which it is displaced from the inner laminate structure to enable the contents of the package to be at least partially seen through the inner laminate structure.

12. A package assembly as claimed in claim 11, in which a line of weakness is provided in the outer laminate structure (322) by means of which the section (326) can be fully removed after opening.

13. A package assembly as claimed in claim 11 or claim 12, wherein the section (326) of the outer laminate structure is bonded to the inner laminate structure (320) by means of a peelable and preferably a re-sealable adhesive (334).

14. A package assembly as claimed in claim 13, in which the peelable/re-sealable adhesive (334) is provided about a peripheral edge region of the section (326) of the outer laminate structure (322) and/or a peripheral edge region of the corresponding section of the inner laminate structure (320).

15. A package assembly as claimed in any one of claims 11 to 14, in which printing is applied to the outer laminate structure (322) within the section (326) so as to be visible from the inner surface of the section when the section is moved to the open position.

## Patentansprüche

1. Verfahren zur Herstellung eines Verpackungsmaterials zur Bildung einer einen oder mehrere Artikel umschließenden Packung, wobei das Verfahren die folgenden Schritte umfasst:
a. Zusammenlaminieren von mindestens zwei Materialschichten zur Bildung eines laminierten Verpackungsmaterials, welches eine innere Laminatstruktur (320) und eine äußere Laminatstruktur (322) aufweist, wobei die innere Laminatstruktur transluzent oder transparent und die äußere Laminatstruktur undurchsichtig ist;
b. Bilden einer Kerblinie (328) in der undurchsichtigen Laminatstruktur zum Definieren eines Abschnitts (326) innerhalb der äußeren Laminatstruktur, der vollständig oder teilweise entfernt werden kann;
**dadurch gekennzeichnet, dass** das Verfahren das Bilden einer Kerblinie (328) in einer solchen Weise umfasst, dass sie den Abschnitt (326) nur teilweise umschließt, so dass der Abschnitt mit dem Rest der undurchsichtigen Laminatstruktur entlang einer Linie (332) verbunden bleibt, um welche der Abschnitt (326) der undurchsichtigen Laminatstruktur gefaltet werden kann.

2. Verfahren nach Anspruch 1, wobei das Verfahren das Bilden einer Schwächungslinie in der undurchsichtigen Laminatstruktur umfasst, entlang derer die undurchsichtige Laminatstruktur abgetrennt werden kann, um den Abschnitt (326) vollständig zu entfernen.

3. Verfahren nach einem der vorstehenden Ansprüche, wobei das Verfahren das Verbinden der inneren mit der äußeren Laminatstruktur (320, 322) im Wesentlichen über die gesamten, einander gegenüberliegenden Oberflächen umfasst, mit Ausnahme des Bereiches, der von der Kerblinie (328) begrenzt ist oder begrenzt werden soll.

4. Verfahren nach Anspruch 3, umfassend das Auftragen eines dauerhaften Kaschierklebstoffs auf im Wesentlichen die gesamte Laminierfläche von mindestens einer der inneren oder äußeren Laminatstruktur (320, 322) mit Ausnahme eines Bereichs, der von der Kerblinie (328) umschlossen ist oder umschlossen werden soll, sowie das Inkontaktbringen der Oberflächen der inneren und äußeren Laminatstruktur.

5. Verfahren nach Anspruch 4, wobei das Verfahren umfasst, dass die Laminierflächen der inneren und äußeren Laminatstruktur (320, 322) in dem von der Kerblinie (328) umschlossenen oder zu umschließenden Bereich frei von Klebstoff gehalten werden.

6. Verfahren nach Anspruch 4, wobei das Verfahren umfasst, dass ein ablösbarer Klebstoff (334) auf mindestens eine der Laminierflächen der inneren und äußeren Laminatstruktur (320, 322) in dem von der Kerblinie (328) umschlossenen oder zu umschließenden Bereich aufgetragen wird.

7. Verfahren nach Anspruch 4, wobei das Verfahren umfasst, dass ein ablösbarer, insbesondere ein wieder verschließbarer Klebstoff (334) auf mindestens eine der Laminierflächen der inneren und äußeren Laminatstruktur (320, 322) in dem äußeren Randbereich des von der Kerblinie (328) umschlossenen oder zu umschließenden Bereichs aufgetragen wird.

8. Verfahren nach einem der vorstehenden Ansprüche, umfassend das Ausbilden einer durchgehenden Länge von laminiertem Verpackungsmaterial und das Definieren einer Vielzahl von eine Packung bildenden Teilbereichen (316) sowie das Ausbilden mindestens einer oben genannten Kerblinie (328) in der äußeren, undurchsichtigen Laminatstruktur (322) innerhalb jedes, eine Packung bildenden Teilbereichs.

9. Verfahren nach einem der vorstehenden Ansprüche, wobei das Material ein flexibles Material ist und das Verfahren die Formung der durchgehenden Länge des flexiblen Verpackungsmaterials zu einer Rolle umfasst.

10. Verfahren nach einem der vorstehenden Ansprüche, wobei das Verfahren das Bedrucken der äußeren, undurchsichtigen Laminatstruktur (322) umfasst, so dass der Aufdruck auf der Innenfläche des Abschnitts (326) der undurchsichtigen Laminatstruktur sichtbar ist.

11. Verpackungsanordnung (310) umfassend mindestens einen Artikel (312) und eine Packung (314), die den mindestens einen Artikel umschließt, wobei die Packung aus einem laminierten Material geformt ist, welches Material eine innere (320) und äußere (322) Laminatstruktur aufweist, wobei die innere Laminatstruktur (320) transluzent oder transparent und die äußere Laminatstruktur (322) undurchsichtig ist, **dadurch gekennzeichnet, dass** ein Bereich (326) der undurchsichtigen Laminatstruktur (332) relativ zur inneren Laminatstruktur um eine Faltlinie (328) beweglich ist, und zwar zwischen einer geschlossenen Position, in der er einen zugehörigen Bereich der inneren Laminatstruktur (320) abdeckt, und einer offenen Position, bei der er von der inneren Laminatstruktur abgehoben ist, so dass der Inhalt der Packung zumindest teilweise durch die innere Laminatstruktur sichtbar ist.

12. Verpackungsanordnung nach Anspruch 11, in welcher eine Schwächungslinie in der äußeren Laminatstruktur (322) vorgesehen ist, mit deren Hilfe der Bereich (326) nach dem Öffnen vollständig entfernt werden kann.

13. Verpackungsanordnung nach einem der Ansprüche 11 oder 12, wobei der Bereich (326) der äußeren Laminatstruktur mit der inneren Laminatstruktur (320) durch einen ablösbaren und vorzugsweise wieder verschließbaren Klebstoff (334) verbunden ist.

14. Verpackungsanordnung nach Anspruch 13, wobei der ablösbare/wieder verschließbare Klebstoff (334) auf einem Randbereich des Abschnitts (326) der äußeren Laminatstruktur (322) und/oder auf einem Randbereich des dazugehörigen Abschnitts der inneren Laminatstruktur (320) vorgesehen ist.

15. Verpackungsanordnung nach einem der Ansprüche 11 bis 14, wobei die äußere Laminatstruktur (322) innerhalb des Abschnitts (326) einen Aufdruck aufweist, welcher auf der inneren Oberfläche des Abschnitts sichtbar wird, wenn der Abschnitt in die geöffnete Position bewegt wird.

## Revendications

1. Procédé de fabrication d'un matériau d'emballage destiné à être utilisé dans la formation d'un emballage pour renfermer un ou plusieurs articles, le procédé comprenant les étapes consistant à :
a. stratifier ensemble au moins deux couches de matériau pour former un matériau d'emballage stratifié présentant une structure stratifiée interne (320) et une structure stratifiée externe (322), la structure stratifiée interne étant translucide ou transparente et la structure stratifiée externe étant opaque ;
b. former une ligne de pliure (328) dans la structure stratifiée opaque pour définir dans la structure stratifiée opaque externe une section (326) qui peut être totalement ou partiellement enlevée ;
**caractérisé en ce que** le procédé comprend la formation de la ligne de pliure (328) de sorte qu'elle n'entoure que partiellement la section (326) afin que la section reste attachée au reste de la structure stratifiée opaque le long d'une ligne (332) autour de laquelle la section (326) de la structure stratifiée opaque peut être pliée.

2. Procédé selon la revendication 1, le procédé comprenant la formation, dans la structure stratifiée opaque, d'une ligne d'affaiblissement le long de laquelle la structure stratifiée opaque peut être déchirée pour enlever complètement la section (326).

3. Procédé selon l'une quelconque des revendications précédentes, le procédé comprenant le collage des structures stratifiées interne et externe (320, 322) ensemble sur sensiblement la totalité de leurs surfaces opposées à l'exception d'une zone qui est, ou doit être, délimitée par la ligne de pliure (328).

4. Procédé selon la revendication 3, le procédé comprenant l'application d'un adhésif de stratification permanent sur sensiblement la totalité de la face de stratification d'au moins une des structures stratifiées interne et externe (320, 322), à l'exception d'une zone qui est, ou doit être, délimitée par la ligne de pliure (328), et la mise en contact des faces de stratification des structures stratifiées interne et externe.

5. Procédé selon la revendication 4, le procédé comprenant l'étape consistant à laisser exemptes de tout adhésif les faces de stratification des structures stratifiées interne et externe (320, 322) dans la zone qui est, ou doit être, délimitée par la ligne de pliure (328).

6. Procédé selon la revendication 4, le procédé comprenant l'application d'un adhésif décollable (334) sur la face de stratification d'au moins une des structures stratifiées interne et externe (320, 322) dans la zone qui est, ou doit être, délimitée par la ligne de pliure (328).

7. Procédé selon la revendication 4, le procédé comprenant l'application d'un adhésif décollable, et plus particulièrement d'un adhésif réutilisable (334) sur la face de stratification d'au moins une des structures stratifiées interne et externe (320, 322) dans une région périphérique externe de la zone qui est, ou doit être, délimitée par la ligne de pliure (328).

8. Procédé selon l'une quelconque des revendications précédentes, le procédé comprenant la formation d'une longueur continue de matériau d'emballage stratifié définissant une pluralité de parties (316) formant l'emballage le long de sa longueur et la formation d'au moins une dite ligne de pliure (328) dans la structure stratifiée opaque externe (322) à l'intérieur de chacune des parties formant l'emballage.

9. Procédé selon l'une quelconque des revendications précédentes, dans lequel le matériau est un matériau souple, et le procédé comprend la formation de la longueur continue de matériau d'emballage souple en un rouleau.

10. Procédé selon l'une quelconque des revendications précédentes, dans lequel le procédé comprend l'impression sur la structure stratifiée opaque externe (322) de telle sorte que l'impression soit visible sur la surface interne de la section (326) de la structure stratifiée opaque.

11. Ensemble d'emballage (310) comprenant au moins un élément (312) et un emballage (314) renfermant au moins un élément, l'emballage étant formé à partir d'un matériau stratifié présentant une structure stratifiée interne (320) et une structure stratifiée externe (322), la structure stratifiée interne (320) étant translucide ou transparente et la structure stratifiée externe (322) étant opaque, **caractérisé en ce qu**'une section (326) de la structure stratifiée externe opaque (332) est mobile par rapport à la structure stratifiée interne autour d'une ligne de pliure (328) entre une position fermée dans laquelle elle recouvre une section correspondante de la structure stratifiée interne (320) et une position ouverte dans laquelle elle est déplacée de la structure stratifiée interne pour permettre au contenu de l'emballage d'être au moins partiellement vu à travers la structure stratifiée interne.

12. Ensemble d'emballage selon la revendication 11, dans lequel une ligne d'affaiblissement ménagée dans la structure stratifiée externe (322) permet de retirer complètement la section (326) après ouverture.

13. Ensemble d'emballage selon la revendication 11 ou la revendication 12, dans lequel la section (326) de la structure stratifiée externe est liée à la structure stratifiée interne (320) au moyen d'un adhésif décollable et, de préférence, réutilisable (334).

14. Ensemble d'emballage selon la revendication 13, dans lequel l'adhésif décollable/réutilisable (334) est prévu autour d'une zone de bord périphérique de la section (326) de la structure stratifiée externe (322) et/ou d'une zone de bord périphérique de la section correspondante de la structure stratifiée interne (320).

15. Ensemble d'emballage selon l'une quelconque des revendications 11 à 14, dans lequel l'impression est appliquée sur la structure stratifiée externe (322) dans la section (326) de manière à être visible depuis la surface interne de la section lorsque la section est déplacée à la position ouverte.
